# EUROPÄISCHE PATENTSCHRIFT

(11) **EP 3 628 392 B1**
(45) Veröffentlichungstag und Bekanntmachung des Hinweises auf die Patenterteilung: **05.04.2023**
(21) Anmeldenummer: 18020472.9
(22) Anmeldetag: 28.09.2018
(51) Int. Cl.: B01D 53/14, C10K 1/00, C10K 1/16

(54) **VERFAHREN ZUR REINIGUNG VON SYNTHESEROHGAS MIT ERZEUGUNG EINES SAUERGASES**
METHOD FOR THE PURIFICATION OF RAW SYNTHESIS GAS WITH GENERATION OF AN ACID GAS
PROCÉDÉ DE NETTOYAGE DE GAZ BRUT DE SYNTHÈSE AVEC PRODUCTION D'UN GAZ ACIDE

(43) Veröffentlichungstag der Anmeldung: 01.04.2020
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Corbet, Sharon, 60438 Frankfurt am Main (DE); Gubrinski, Alfred, 64390 Erzhausen (DE); Puri, Pankaj, 121004 Faridabad (IN); Rappold, Dorit, 60437 Frankfurt am Main (DE); Schmidt, Sophia, 60486 Frankfurt am Main (DE)
(74) Vertreter: Stang, Stefan

(56) Entgegenhaltungen:
- EP-A1- 1 839 727
- WO-A1-2016/120018
- CN-A- 106 281 476
- DE-A1- 2 644 323
- DE-A1-102007 052 137
- DE-A1-102012 006 748

## Beschreibung

### Gebiet der Erfindung

Die Erfindung betrifft ein Verfahren zur Reinigung von Syntheserohgas mit Methanol als physikalisch wirkendem Absorptionsmittel, bei dem ein zumindest Schwefelwasserstoff (H₂S) aufweisendes Sauergas erzeugt wird.

### Stand der Technik

Verfahren zur Abtrennung von unerwünschten Begleitstoffen aus technischen Syntheserohgasen mittels physikalischer oder chemischer Absorption sind aus dem Stand der Technik bekannt. Mit solchen Verfahren können unerwünschte Bestandteile aus durch Vergasung oder Reformierung von kohlenstoffhaltigen Einsatzstoffen erzeugten Syntheserohgasen, beispielsweise Kohlendioxid (CO₂) und Schwefelwasserstoff (H₂S), aber auch Carbonylsulfid (COS), Mercaptane und Cyanwasserstoff (HCN), von den erwünschten Synthesegasbestandteilen wie Wasserstoff (H₂) und Kohlenmonoxid (CO) bis in den Spurenbereich entfernt werden.

In diesen auch als Gaswäschen bezeichneten Verfahren werden die Eigenschaften von Flüssigkeiten ausgenutzt, gasförmige Stoffe zu absorbieren und physikalisch oder chemisch gebunden in Lösung zu halten. Wie gut ein Gas von einer Flüssigkeit physikalisch absorbiert wird, wird durch den Absorptionskoeffizienten - auch als Löslichkeitskoeffizient bezeichnet - ausgedrückt. Je besser das Gas in der Flüssigkeit absorbiert oder gelöst wird, desto größer ist der Absorptionskoeffizient. Der Absorptionskoeffizient steigt im Allgemeinen mit sinkender Temperatur und, nach dem Gesetz von Henry, mit steigendem Druck. Die in Gaswäschen eingesetzten Flüssigkeiten werden allgemein auch als Waschmittel oder Absorptionsmittel bezeichnet.

Bei der Gaswäsche aus dem Syntheserohgas ausgewaschene Komponenten werden im Anschluss an die Gaswäsche aus dem beladenen Absorptionsmittel entfernt, wodurch ein regeneriertes oder zumindest teilregeneriertes Absorptionsmittel erhalten wird. Bekannte Verfahren zur Regenerierung des Absorptionsmittels sind Druckentspannung (Flashen) mit oder ohne Stripp-gas sowie Heißregenerierung, bei der der Eigendampf des Absorptionsmittels als Stripp-Gas verwendet wird.

Ein bekanntes und häufig angewendetes Gaswäscheverfahren ist das Rectisol-Verfahren, das in Ullmann's Encyclopedia of Industrial Chemistry, 6. Aufl. Bd. 15, S. 399 ff. grundsätzlich beschrieben wird. Im Rectisol-Verfahren erfolgt die Aufnahme der oben erwähnten, unerwünschten Bestandteile des Syntheserohgases durch kaltes, das heißt signifikant unter Umgebungstemperatur abgekühltes Methanol als Absorbens oder Absorptionsmittel, wobei in einer Absorptionsvorrichtung, auch als Absorber oder Waschkolonne bezeichnet, ein intensiver Stoffaustausch zwischen dem Syntheserohgas und dem Absorptionsmittel erfolgt. Dabei erhöht sich die Löslichkeit der unerwünschten Gasbestandteile wie oben erwähnt mit sinkender Temperatur des Methanols und zunehmendem Druck, während sie für Wasserstoff und Kohlenmonoxid praktisch konstant bleibt. Methanol hat zudem den Vorteil, selbst bei Temperaturen bis hinab zu -75 °C noch eine geringe Viskosität aufzuweisen, womit es auch bei sehr niedrigen Temperaturen großtechnisch verwendbar ist.

So beschreibt beispielsweise WO 2016/120018 A1 ein Verfahren zur Abtrennung unerwünschter, insbesondere acider Gasbestandteile aus einem Rohsynthesegas durch Absorption mit kaltem Methanol als physikalischem Waschmittel, bei dem das Methanol in einer Kompressionskältemaschine unter Verwendung eines Mehrkomponenten-Kühlmittels abgekühlt wird, wobei das Kühlmittel aus einem Propylen und mindestens einen weiteren Stoff umfassenden Stoffgemisch besteht.

DE 10 2007 052 137 A1 offenbart ein Verfahren zur Waschmittelregenerierung in einer physikalischen Gaswäsche, insbesondere zur Regenerierung von Methanol, wobei aus einem Gasgemisch Schwefelkomponenten (H₂S, COS) und Cyanwasserstoff (HCN) durch Methanol ausgewaschen werden, wobei diese Komponenten selektiv aus dem zu regenerierenden Waschmittel abtrennbar sind.

DE 26 44 323 A1 offenbart ein Verfahren zum Regenerieren von wasserhaltigem Methanol im Rahmen einer Gaswäsche, bei welchem dem Lösungsmittel (Methanol) eine lösliche Substanz zugesetzt wird, welche mit aus dem Gas der Gaswäsche ins Lösungsmittel übergegangenen Metallverbindungen lösliche Komplexverbindungen bildet. Auf diese Weise wird die Bildung unlöslicher Verbindungen, wie beispielsweise die Bildung von Metallsulfiden aus Metallen und Schwefelwasserstoff, verhindert.

Die in Gaswäschen verwendeten Absorptionsvorrichtungen weisen jeweils dedizierte Bereiche oder Stufen zur Entfernung von sauren Gasbestandteilen und weiteren Verunreinigungen auf. Aufgrund der Selektivität des jeweiligen Absorptionsmittels für bestimmte Gasbestandteile werden diese mehr oder weniger leicht absorbiert. Im Beispiel des mit Methanol als Absorptionsmittel arbeitenden Rectisol-Verfahrens werden Spurenbestandteile wie Cyanwasserstoff (HCN) am leichtesten absorbiert, gefolgt von den Schwefelverbindungen Schwefelwasserstoff (H₂S), Carbonylsulfid (COS) und Mercaptanen, und schließlich gefolgt von Kohlendioxid (CO₂), das im Vergleich zu den vorgenannten Gasen in Bezug auf Methanol den niedrigsten Absorptionskoeffizienten aufweist. Aufgrund dieser Selektivität werden in den dedizierten Bereichen oder Stufen der Absorptionsvorrichtung üblicherweise ein mit hauptsächlich Kohlendioxid beladenes Absorptionsmittel erzeugt, ein mit Schwefelwasserstoff und Kohlendioxid beladenes Absorptionsmittel erzeugt ("Entschwefelung"), sowie ein mit Spurenbestandteilen beladenes Absorptionsmittel erzeugt.

Bei der Entschwefelung im Rectisol-Verfahren entfernter Schwefelwasserstoff (H₂S) wird üblicherweise durch Heißregenerierung des mit H₂S beladenen Methanols wieder ausgetrieben. Das dabei erhaltene H₂S aufweisende Gas, auch als Sauergas bezeichnet, kann anschließend einer Anlage zur Produktion von elementarem Schwefel nach dem Claus-Verfahren zugeführt werden. Dabei sind an das der Claus-Anlage zugeführte Sauergas bestimmte Anforderungen bezüglich des H₂S-Gehalts zu stellen, der im Normalfall 25 mol-% nicht unterschreiten sollte.

Zur Erreichung eines möglichst hohen H₂S-Gehalts im Sauergas kommt im Rahmen des Rectisol-Verfahrens ein sogenannter Reabsorber zum Einsatz. Dem Reabsorber wird zunächst mit H₂S und CO₂ beladenes Methanol aus der Entschwefelungsstufe der Absorptionsvorrichtung zugeführt. Anschließend wird CO₂ durch Druckentspannung und Strippen mit Stickstoff weitgehend vollständig ausgetrieben und als Abgas entfernt. Beim Strippen mitausgetriebener Schwefelwasserstoff wird durch dem Reabsorber zugeführtes Methanol reabsorbiert, wobei aufgrund des größeren Absorptionskoeffizienten von H₂S gegenüber CO₂ in Methanol im Wesentlichen H₂S und CO₂ in vernachlässigbaren Mengen reabsorbiert wird. Das den Reabsorber verlassende, mit H₂S beladene Methanol wird anschließend einer Heißregenerierung zugeführt, wobei ein als Hauptbestandteil H₂S aufweisendes Sauergas erhalten wird. Die Heißregenerierung verlassendes Sauergas weist einen so hohen H₂S-Gehalt und einen so niedrigen CO₂-Gehalt auf, dass es die Anforderungen für den Claus-Prozess in der Regel erfüllt.

Die Heißregenerierung verlassendes Sauergas kann nicht unmittelbar dem Claus-Verfahren zugeführt werden. Vielmehr ist das Sauergas in einem dem Claus-Verfahren vorgelagerten Schritt von bei der Heißregenerierung mit ausgetriebenen Methanol-Dämpfen durch Kondensation dieser Dämpfe in einem Sauergas-Abscheider zu befreien. Dadurch wird der H₂S-Gehalt im Sauergas auf die erforderliche Menge erhöht. Der Sauergas-Abscheider weist einen Absorptionsbereich sowie zumindest zwei Austrittsöffnungen auf. Die erste Austrittsöffnung dient dem Austritt des Sauergases in Richtung Claus-Anlage. Die zweite Austrittsöffnung dient der Rückführung eines im Absorptionsbereich behandelten Teils des Sauergases zum Reabsorber. Es wird somit ein Teil des dem Sauergasabscheider zugeführten Schwefelwasserstoffs zum Reabsorber zurückgeführt, wodurch im Resultat ein erhöhter Gehalt von Schwefelwasserstoff im Sauergas erreicht wird.

Der Absorptionsbereich des Sauergas-Abscheiders dient der Entfernung von Spurenkomponenten wie HCN und/oder NH₃, welche dafür vorgesehen sind die Gaswäsche-Anlage mit dem Sauergas in Richtung Claus-Anlage zu verlassen. Die vorgenannten Spurenkomponenten sollten nicht in andere Teile der Gaswäsche-Anlage gelangen, um die Kontamination von Synthesegas oder anderen Produkten zu verhindern. HCN weist ferner korrosive Eigenschaften auf, was dazu führen kann, das für bestimmte Anlagenteile ein hochwertiger Stahl als Werkstoff verwendet werden müsste. NH₃ entsteht beispielsweise aus HCN im Rahmen einer der Gaswäsche vorgeschalteten Wassergas-Shift-Reaktion (Umsetzung von Kohlenmonoxid mit Wasser zu Wasserstoff und Kohlendioxid) und kann dadurch in Spuren im Syntheserohgas vorhanden sein. Typischerweise wird NH₃ in einem Ammoniak-Wäscher mit Wasser als Absorptionsmittel vor der Absorption mit Methanol ausgewaschen. Wird NH₃ dabei nicht vollständig entfernt, können sich Reste davon im Kopfbereich des Heißregenerators anreichern. Falls NH₃ über den Sauergas-Abscheider in den Reabsorber gelangt, bilden sich dort mit CO₂ Ammoniumcarbamat und/oder Ammoniumcarbonat, was zu Verlegungen und Verstopfungen von Bauteilen führen kann. Aus NH₃ und H₂S bildet sich Ammoniumsulfid, welches sich im Absorptionsmittel anreichert und das Synthesegas verunreinigen kann.

HCN und/oder NH₃ sind somit Komponenten, die zu keinem Zeitpunkt des Verfahrens in den Reabsorber oder andere Anlagenkomponenten gelangen sollten.

Aus diesem Grund wird/werden HCN und/oder NH₃ standardmäßig im Absorptionsbereich des Sauergas-Abscheiders mit Hilfe von tiefkaltem Methanol absorbiert. Das von HCN und/oder NH₃ weitgehend befreite Sauergas kann anschließend bedenkenlos zum Reabsorber geleitet werden.

Im Sauergas-Abscheider werden tiefkaltes Methanol, üblicherweise aus dem Reabsorber, und weniger kaltes, zumindest teilweise kondensiertes Methanol aus dem Heißregenerator zusammengeführt. Aus dem weniger kalten Methanol des Heißregenerators austretender Cyanwasserstoff und/oder Ammoniak kann/können dabei durch das durch die Temperaturdifferenz bedingte besser absorbierende tiefkalte Methanol gelöst werden. Dieser Vorgang führt dazu, dass weniger HCN und/oder NH₃ den Sauergas-Abscheider in Richtung Claus-Anlage verlässt/verlassen. Gleichzeitig kommt es zu einer Anreicherung von HCN und/oder NH₃ im Kopfbereich des Heißregenerators. Im Sauergas-Abscheider verwendetes tiefkaltes Methanol erfordert ferner, dass damit in Berührung kommende Teile des Sauergas-Abscheiders aus einem hochwertigen Werkstoff, beispielsweise einem rostfreiem Stahl, zu fertigen sind. Dadurch anfallende höhere Werkstoffkosten für den Sauergasabscheider sind zu vermeiden.

### Beschreibung der Erfindung

Es ist somit eine Aufgabe der vorliegenden Erfindung ein Verfahren anzugeben, das die vorgenannten Nachteile des Standes der Technik zumindest teilweise überwindet.

Eine weitere Aufgabe der Erfindung liegt darin ein Verfahren anzugeben, welches die Absorption von HCN und/oder NH₃ im Sauergas-Abscheider verbessert, so dass ein möglichst geringer Anteil dieser Substanzen vom Sauergas-Abscheider in den Reabsorber gelangt.

Eine weitere Aufgabe der Erfindung liegt darin ein Verfahren anzugeben, das den Einsatz von hochwertigen Werkstoffen wie rostfreien Stählen in im Rahmen des Verfahrens verwendeten Bauteilen reduziert.

Eine weitere Aufgabe der Erfindung liegt darin eine Vorrichtung oder eine Verwendung anzugeben, welche die vorgenannten Aufgaben zumindest teilweise löst.

Die Aufgaben der Erfindung werden zumindest teilweise gelöst durch ein Verfahren zur Reinigung von Syntheserohgas mit Methanol als physikalisch wirkendem Absorptionsmittel, bei dem ein zumindest Schwefelwasserstoff (H₂S) aufweisendes Sauergas erzeugt wird, und das Verfahren folgende Prozessschritte umfasst, wobei die Prozessschritte nicht zwingend in der angegebenen Reihenfolge auszuführen sind:
- Behandeln von zumindest Kohlenmonoxid (CO), Wasserstoff (H₂), Schwefelwasserstoff (H₂S), sowie Cyanwasserstoff (HCN) und/oder Ammoniak (NH₃) aufweisendem Syntheserohgas mit Methanol in einer Absorptionsvorrichtung, wobei ein zumindest mit H₂S, sowie HCN und/oder NH₃ beladenes Methanol erhalten wird;
- Heißregenerieren des mit H₂S, sowie HCN und/oder NH₃ beladenen Methanols in einem Heißregenerator, wobei ein zumindest Methanol, H₂S, sowie HCN und/oder NH₃ aufweisendes Gasgemisch erhalten wird, das aus dem Heißregenerator abgezogen wird;
- Kühlen des aus dem Heißregenerator abgezogenen Gasgemischs und Überführen des gekühlten Gasgemischs in einen Sauergas-Abscheider, wobei der Sauergas-Abscheider einen Absorptionsbereich und einen Kondensationsbereich aufweist, wobei der Absorptionsbereich und der Kondensationsbereich durch einen gasdurchlässigen Boden voneinander separiert sind;
- Kondensieren von Methanol aus dem Gasgemisch im Kondensationsbereich des Sauergas-Abscheiders, Abziehen des kondensierten Methanols aus dem Sauergas-Abscheider und Überführen zum Heißregenerator;
- Abziehen eines H₂S, sowie HCN und/oder NH₃ aufweisenden ersten Sauergas-Teilstroms aus dem Sauergas-Abscheider;
- Leiten eines H₂S, sowie HCN und/oder NH₃ aufweisenden zweiten Sauergas-Teilstroms über den Absorptionsbereich des Sauergas-Abscheiders, wobei HCN und/oder NH₃ durch dem Absorptionsbereich des Sauergas-Abscheiders zugeführtes tiefkaltes Methanol absorbiert wird, sich mit HCN und/oder NH₃ beladenes tiefkaltes Methanol im Bereich des gasdurchlässigen Bodens sammelt und ein zumindest teilweise von HCN und/oder NH₃ befreiter zweiter Sauergas-Teilstrom erhalten wird;
- Abziehen des zumindest teilweise von HCN und/oder NH₃ befreiten zweiten Sauergas-Teilstroms aus dem Sauergas-Abscheider;
- Abziehen des mit HCN und/oder NH₃ beladenen tiefkalten Methanols vom Bereich des gasdurchlässigen Bodens des Sauergas-Abscheiders und Überführen des mit HCN und/oder NH₃ beladenen tiefkalten Methanols zum Heißregenerator.

Unter "physikalisch wirkendem Absorptionsmittel" wird in Zusammenhang mit Gegenständen der Erfindung ein Absorptionsmittel verstanden, bei dem die Löslichkeit des betreffenden Gases im Absorptionsmittel durch physikalische Wechselwirkungen bewirkt wird.

Unter "Syntheserohgas" wird in Zusammenhang mit Gegenständen der Erfindung ein Synthesegas verstanden, das neben erwünschten Bestanteilen wie Wasserstoff (H₂) und Kohlenmonoxid (CO) noch über unerwünschte Bestandteile wie Schwefelwasserstoff (H₂S) und Kohlendioxid (CO₂) verfügt, von denen es in einem Gaswäscheverfahren zu befreien ist.

Unter einem "Sauergas" wird in Zusammenhang mit Gegenständen der Erfindung ein Gas oder Gasgemisch verstanden, das zumindest eine in Wasser oder einem anderen geeigneten protischen Lösungsmittel sauer reagierende Komponente aufweist, wie beispielsweise Schwefelwasserstoff (H₂S) oder Cyanwasserstoff (HCN). Das Sauergas kann in Zusammenhang mit Gegenständen der Erfindung außer einer oder mehreren sauer reagierenden Komponenten auch eine oder mehrere basisch oder neutral reagierende Komponenten aufweisen. Ein Beispiel für eine basisch reagierende Komponente im Sauergas ist Ammoniak (NH₃).

Unter einem "Sauergas-Abscheider" wird in Zusammenhang mit Gegenständen der Erfindung allgemein eine Vorrichtung zur Abtrennung einer Flüssigkeit aus einem Gemisch verstanden, wobei es sich bei dem Gemisch beispielsweise um ein zweiphasiges Gemisch aus zumindest einem Gas und einer Flüssigkeit handeln kann, beispielsweise ein Aerosol, wobei sich die Vorrichtung zur Abtrennung eines Sauergases aus einem solchen Gemisch eignet.

Unter einem "Kondensationsbereich" des Sauergas-Abscheiders wird in Zusammenhang mit Gegenständen der Erfindung ein Bereich verstanden, der sich zum Übergang eines in einem Gemisch vorhandenen Stoffes vom gasförmigen in den flüssigen Aggregatzustand eignet.

Unter einem "Absorptionsbereich" des Sauergas-Abscheiders wird in Zusammenhang mit Gegenständen der Erfindung ein Bereich verstanden, der sich zur Absorption zumindest eines gasförmigen Stoffes in einem geeigneten flüssigen Absorptionsmittel eignet.

Unter "tiefkaltes Methanol" wird in Zusammenhang mit Gegenständen der Erfindung Methanol verstanden, das eine Temperatur von kleiner oder gleich 0 °C aufweist, oder kleiner gleich -15 °C, oder kleiner gleich -30 °C, oder kleiner gleich -40 °C, oder kleiner gleich -50 °C, oder kleiner gleich -60 °C.

Unter einem "gasdurchlässigen Boden" wird im Zusammenhang mit Gegenständen der Erfindung ein Boden verstanden, der für gasförmige Substanzen durchlässig ist. Gleichzeitig ist der gasdurchlässige Boden für Flüssigkeiten teilweise oder vollständig nicht durchlässig. Der gasdurchlässige Boden kann in einem Beispiel so konstruiert sein, dass sich eine Flüssigkeitsschicht auf dem gasdurchlässigen Boden bis zu einer bestimmten Menge sammeln kann, so dass der gasdurchlässige Boden in Abhängigkeit seiner Konstruktionsweise zumindest bis zu einem bestimmten Maß für eine Flüssigkeit nicht durchlässig ist. In einem Beispiel ist der gasdurchlässige Boden für eine Flüssigkeit unidirektional undurchlässig, das heißt in einer Richtung ist der gasdurchlässige Boden für eine Flüssigkeit undurchlässig, jedoch in einer anderen, beispielsweise entgegengesetzten Richtung ist der gasdurchlässige Boden für eine Flüssigkeit durchlässig. In einem Beispiel handelt es sich bei dem gasdurchlässigen Boden um einen Boden, der aufgrund seiner makroskopisch-geometrischen Ausgestaltung von einem Gas durchströmt werden kann, auf dem sich aber gleichzeitig eine Schicht einer Flüssigkeit bis zu einer bestimmten Menge sammeln kann, wodurch der Boden für die Flüssigkeit zumindest teilweise nicht durchlässig ist. In einem anderen Beispiel handelt es sich bei dem gasdurchlässigen Boden um einen Boden, der auf mikroskopischer Ebene derart gestaltet ist, dass ein Gas passieren kann, jedoch keine Flüssigkeit. Ein Beispiel für einen solchen Boden ist eine für Gase durchlässige und Flüssigkeiten undurchlässige Membran. Die genannten Beispiele sind nicht in beschränkender Weise zu verstehen, so dass weitere Ausführungsformen gasdurchlässiger Böden denkbar sind.

Unter einem "Heißregenerator" wird im Zusammenhang mit Gegenständen der Erfindung eine Vorrichtung verstanden, die sich allgemein zur Heißregenerierung beladener Absorptionsmittel eignet, insbesondere zur Heißregenerierung beladener Absorptionsmittel mit Eigendampf des Absorptionsmittels.

In aus dem Stand der Technik bekannten Verfahren tritt ein vorgekühltes Gemisch aus zumindest teilweise kondensiertem Methanol (zweiphasiges Gemisch aus dampfförmigem und flüssigem Methanol) und Sauergas in den Sauergas-Abscheider ein. Dabei wird HCN und/oder NH₃ als Verunreinigung aufweisendes, zumindest H₂S aufweisendes Sauergas aus dem Gemisch freigesetzt, welches als erster Teilstrom aus dem Sauergas-Abscheider austritt. Gleichzeitig wird ein zweiter Teilstrom des Sauergases über den Absorptionsbereich des Sauergas-Abscheiders geleitet und tritt nach Absorption von Verunreinigungen wie HCN und/oder NH₃ aus dem Sauergas-Abscheider aus, um beispielsweise in einem weiteren Schritt einer Konzentrierung von H₂S zugeführt zu werden. Im zweiten Teilstrom vorhandene Verunreinigungen wie HCN und/oder NH₃ werden im Absorptionsbereich des Sauergas-Abscheiders durch tiefkaltes Methanol entfernt. Dabei werden durch die niedrige Temperatur des tiefkalten Methanols in nachteiliger Weise auch aus dem ersten Teilstrom ausgasende Verunreinigungen absorbiert, die sich anschließend beispielsweise im Kopfbereich des Heißregenerators anreichern können.

Durch die erfindungsgemäße Verfahrensführung, bei der der Kondensationsbereich und der Absorptionsbereich des Sauergas-Abscheiders durch einen gasdurchlässigen Boden voneinander separiert sind, wird der vorgenannte Nachteil eliminiert. Der gasdurchlässige Boden verhindert, dass tiefkaltes Methanol mit aus dem ersten Teilstrom ausgasenden Verunreinigungen wie HCN und/oder NH₃ in Kontakt kommt. Vielmehr wird im Bereich des gasdurchlässigen Bodens angesammeltes tiefkaltes Methanol, welches ausschließlich Verunreinigungen wie HCN und/oder NH₃ aus dem zweiten Teilstrom aufweist, vom gasdurchlässigen Boden abgezogen und anschließend in den Heißregenerator zurückgeführt. Ein Kontakt zwischen dem tiefkalten Methanol und den Gasen des ersten Teilstroms ist somit nicht möglich, wodurch Verunreinigungen wie HCN und/oder NH₃ aus dem ersten Teilstrom in vorteilhafter Weise nicht durch tiefkaltes Methanol absorbiert werden. Im Resultat unterbleibt eine Anreicherung von durch zusätzlich aus dem ersten Teilstrom absorbierten Verunreinigungen wie HCN und/oder NH₃ im Heißregenerator oder anderen Anlagenteilen.

Eine bevorzugte Ausführungsform des erfindungsgemäßen Verfahrens ist dadurch gekennzeichnet, dass das kondensierte Methanol und das mit HCN und/oder NH₃ beladene tiefkalte Methanol als getrennte Ströme einem Mischbehälter zugeführt werden, und nach Mischen im Mischbehälter zum Heißregenerator zurückgeführt werden.

Der Begriff "Mischbehälter" bedeutet im Zusammenhang mit Gegenständer der Erfindung, dass im Mischbehälter eine zumindest teilweise Durchmischung der dem Mischbehälter zugeführten Fluide stattfindet. Die Durchmischung wird in einem Beispiel durch Diffusion und/oder Konvektion bewirkt. In einem weiteren Beispiel wird die Durchmischung zusätzlich oder stattdessen durch einen statischen und/oder einen aktiven Mischer bewirkt. Dabei sind die Arten der Durchmischung nicht auf die genannten Beispiele beschränkt.

Im Mischbehälter findet eine Angleichung der Temperaturen des vom gasdurchlässigen Boden abgezogenen tiefkalten Methanols aus dem Absorptionsbereich und des kondensierten Methanols aus dem Kondensationsbereich des Sauergas-Abscheiders statt.

Bevorzugt wird dabei auch das aus dem Heißregenerator abgezogene Gasgemisch dem Mischbehälter zugeführt, und im Mischbehälter mit dem kondensierten Methanol sowie dem mit HCN und/oder NH₃ beladenen tiefkalten Methanol zusammengeführt, wobei Methanol aus dem Gasgemisch zumindest teilweise kondensiert, wodurch ein Zweiphasen-Gemisch erhalten wird, und das zumindest teilweise kondensiertes Methanol enthaltende Zweiphasen-Gemisch anschließend dem Sauergas-Abscheider zugeführt.

Das Zweiphasen-Gemisch weist dampfförmiges und gasförmiges Methanol sowie Sauergase auf. Zum weiter verbesserten Ausgleich von Temperaturunterschieden findet im Mischbehälter eine Mischung mit dem aus dem Heißregenerator abgezogenen Gasgemisch und den aus dem Sauergasabscheider abgezogenen Strömen statt. Dadurch wird in vorteilhafter Weise ein unbeabsichtigtes Austreten von Gasen aus kondensiertem Methanol verhindert. Aus kondensiertem Methanol austretende Gase können beispielsweise Probleme in der für die Rückführung des im Sauergasabscheiders kondensierten Methanols zum Heißregenerator bereiten. Durch den zwischen Heißregenerator und Sauergas-Abscheider geschalteten Mischbehälter und den im Mischbehälter kontinuierlich ablaufenden Mischvorgang wird ein solches Ausgasen effektiv verhindert und gleichzeitig ein Temperaturausgleich zwischen den einzelnen Strömen geschaffen, ohne dass zusätzliche Wärmeaustauscher erforderlich wären.

Eine bevorzugte Ausführungsform des erfindungsgemäßen Verfahrens ist dadurch gekennzeichnet, dass der zumindest teilweise von HCN und/oder NH₃ befreite zweite Sauergas-Teilstrom einem Reabsorber zur Reabsorption von im von HCN und/oder NH₃ zumindest teilweise befreiten zweiten Sauergas-Teilstrom enthaltenen H₂S zugeführt wird, wobei im Reabsorber mit H₂S beladenes Methanol erhalten wird.

Der Reabsorber hat vornehmlich die Funktion, aus einem aus der Absorptionsvorrichtung abgezogenen, mit Schwefelwasserstoff (H₂S) und Kohlendioxid (CO₂) beladenen Methanol-Strom durch Strippen mit einem Inertgas zunächst Kohlendioxid auszutreiben und dabei ungewollt mitausgetriebenen Schwefelwasserstoff in tiefkaltem Methanol zu reabsorbieren. Durch Zuführen des zweiten Sauergas-Teilstroms zum Reabsorber findet eine weitere Konzentrierung von H₂S statt, so dass das im Heißregenerator erzeugte Sauergas im Ergebnis über einen höheren H₂S-Gehalt verfügt.

In einem weiteren Beispiel ist bevorzugt, dass das im Reabsorber erhaltene, mit H₂S beladene Methanol dem Heißregenerator zugeführt wird.

Eine bevorzugte Ausführungsform des erfindungsgemäßen Verfahrens ist dadurch gekennzeichnet, dass das tiefkalte Methanol dem Absorptionsbereich des Sauergas-Abscheiders aus dem Reabsorber zugeführt wird.

Das im Reabsorber zirkulierende Methanol verfügt über eine geeignet tiefe Temperatur und Beladung mit H₂S, um sowohl Verunreinigungen wie HCN und/oder NH₃ als auch H₂S aus dem zweiten Teilstrom effektiv absorbieren zu können.

Eine bevorzugte Ausführungsform des erfindungsgemäßen Verfahrens ist dadurch gekennzeichnet, dass das tiefkalte Methanol eine Temperatur von kleiner oder gleich -40 °C aufweist, bevorzugt kleiner oder gleich -50 °C, besonders bevorzugt von kleiner oder gleich -60 °C.

Je tiefer die Temperatur des tiefkalten Methanols, desto effektiver die Absorption von Verunreinigungen wie HCN und/oder NH₃ aus dem zweiten Teilstrom des Sauergases. Dabei hat sich ein Temperaturbereich zwischen -40 °C und -75 °C als besonders vorteilhaft erwiesen, da einerseits eine hohe Absorptionswirkung besteht, andererseits die hydrodynamischen Eigenschaften des Methanols aufgrund der bis -75 °C relativ niedrigen dynamischen Viskosität bei der großtechnischen Verwendung von Vorteil sind. Besonders bevorzugt weist das tiefkalte Methanol einen Temperaturbereich zwischen -60 °C und -65 °C auf. Je kälter das für die Absorption verwendete Methanol ist, desto besser sind dessen Eigenschaften als Absorptionsmittel.

Eine bevorzugte Ausführungsform des erfindungsgemäßen Verfahrens ist dadurch gekennzeichnet, dass der erste Sauergas-Teilstrom einer Claus-Anlage zur Herstellung von Schwefel zugeführt wird.

Im Ergebnis wird durch das erfindungsgemäße Verfahren ein Sauergas erzeugt, das über einen zur Verwendung in einer Claus-Anlage ausreichenden Schwefel-Anteil verfügt. Dabei wird der Schwefel-Anteil nicht ausschließlich durch den im Sauergas enthaltenen Schwefelwasserstoff bestimmt, sondern ferner durch in Methanol absorbierte Mercaptane (Thiole) sowie Carbonylsulfid (COS) und gegebenenfalls weitere Schwefelverbindungen.

Eine bevorzugte Ausführungsform des erfindungsgemäßen Verfahrens ist dadurch gekennzeichnet, dass der Mischbehälter über mindestens einen Einfüllstutzen zum Zuführen des mit HCN und/oder NH₃ beladenen tiefkalten Methanols und/oder des kondensierten Methanols verfügt, wobei ein Ende des Einfüllstutzens so von einer Gehäusewand des Mischbehälters beabstandet ist, dass das mit HCN und/oder NH₃ beladene tiefkalte Methanol und/oder das kondensierte Methanol beim Einfüllvorgang nicht in unmittelbaren Kontakt mit der Gehäusewand des Mischbehälters kommt oder kommen.

Der Mischbehälter verfügt über zumindest einen Einfüllstutzen zum Zuführen des mit HCN und/oder NH₃ beladenen tiefkalten Methanols und/oder des kondensierten Methanols zum Mischbehälter, wobei die getrennten Ströme entweder über einen gemeinsamen Einfüllstutzen dem Mischbehälter zugeführt werden oder jeder Strom über wenigstens einen dedizierten Einfüllstutzen zugeführt wird. Im Mischbehälter findet eine Mischung des mit HCN und/oder NH₃ beladenen tiefkalten Methanol und des kondensierten Methanols mit aus dem Heißregenerator zugeführten, deutlich wärmerem zumindest Methanol, H₂S, sowie HCN und/oder NH₃ aufweisendes Gasgemischs statt. Da insbesondere auf sehr niedrige Temperaturen heruntergekühltes, beladenes Methanol das Material des Mischbehälters durch Korrosion schädigen kann, ist es von Vorteil den Einfüllstutzen so anzuordnen, dass beim Einfüllvorgang kein Kontakt zwischen kaltem Methanol und Mischbehälter besteht. Unmittelbar nach dem Einfüllen des mit HCN und/oder NH₃ beladenen tiefkalten Methanol und des kondensierten Methanols wird dieses durch mit zumindest Methanol, H₂S, sowie HCN und/oder NH₃ aufweisendem Gasgemischs aus dem Heißregenerator gemischt und dadurch erwärmt, wodurch eine korrosive Schädigung weniger wahrscheinlich ist.

Bevorzugt weist das Gehäuse des Mischbehälters einen nicht legierten oder niedrig legierten Stahl als Werkstoff auf, wobei ein nicht legierter Stahl weiter bevorzugt ist.

Dies wird durch die entsprechende Anordnung der Einfüllstutzen ermöglicht, bei der der oder die Einfüllstutzen so von einer Gehäusewand des Mischbehälters beabstandet ist oder sind, dass das mit HCN und/oder NH₃ beladene tiefkalte Methanol und/oder das kondensierte Methanol beim Einfüllvorgang nicht in unmittelbaren Kontakt mit der Gehäusewand des Mischbehälters kommt oder kommen. Es ist somit nicht erforderlich, das Gehäuse des Mischbehälters aus einem hochwertigen Stahl zu fertigen.

Unter einem "nicht legierten Stahl" wird im Zusammenhang mit Gegenständen der Erfindung ein Stahl verstanden, der keine absichtlich zugegebenen Legierungselemente enthält. Kohlenstoff gilt nicht als Legierungselement. Stahlbegleiter wie Silizium und Mangan in natürlichen, nicht absichtlich legierten Mengen können im nicht legierten Stahl enthalten sein.

Unter einem "niedriglegierten Stahl" wird im Zusammenhang mit Gegenständen der Erfindung ein Stahl verstanden, der absichtlich legierte Bestandteile enthält, aber nur in niedrigen Gehalten. Insbesondere enthält ein niedriglegierter Stahl kein Legierungselement mit einem Gehalt von mehr als fünf Gew.-%.

Eine bevorzugte Ausführungsform des erfindungsgemäßen Verfahrens ist dadurch gekennzeichnet, dass der Einfüllstutzen einen säure- und rostbeständigen Stahl als Werkstoff aufweist.

Da der Einfüllstutzen des Mischbehälters in Kontakt mit HCN und/oder NH₃ beladene tiefkalte Methanol und/oder kondensiertem Methanol steht, weist dieser in vorteilhafter Weise einen säure- und rostbeständigen Stahl als Werkstoff auf. In einem weiteren bevorzugten Beispiel weist ausschließlich der Einfüllstutzen des Mischbehälters, als einziges Bauteil des Mischbehälters, einen säure- und rostbeständigen Stahl als Werkstoff auf. Andere Teile des Mischbehälters, vorzugsweise mit Methanol in Kontakt stehende Teile, weisen keinen säure- und rostbeständigen Stahls als Werkstoff auf. Vorzugsweise weisen diese Teile einen nicht legierten oder niedrig legierten Stahl als Werkstoff auf, vorzugsweise einen nicht legierten Stahl.

Unter einem "säure- und rostbeständigen Stahl" wird in Zusammenhang mit Gegenständen der Erfindung ein Stahl verstanden, der durch entsprechende Legierungszusätze eine schützende Oxidschichten ausbildet, die den Stahl vor Säurekorrosion und/oder Sauerstoffkorrosion schützt. Insbesondere weist ein säurebeständiger oder nichtrostender Stahl einen Legierungsanteil von wenigstens 10,5 Gew.-% Chrom auf, vorzugsweise wenigstens 13 Gew.-% Chrom. Vorzugsweise enthält ein säure- und rostbeständiger Stahl ferner wenigstens ein Element ausgewählt aus der Gruppe umfassend Nickel, Molybdän, Titan und Stickstoff als weiteren Legierungsbestandteil oder weitere Legierungsbestandteile.
Weiter offenbart (nicht erfindungsgemäss) ist ein Sauergas-Abscheider zur Abscheidung eines zumindest Schwefelwasserstoff (H₂S) aufweisenden Sauergases aus einem Gasgemisch, aufweisend einen Absorptionsbereich und einen Kondensationsbereich, wobei der Absorptionsbereich und der Kondensationsbereich durch einen gasdurchlässigen Boden voneinander separiert sind;
Mittel zum Zuführen eines zumindest Methanol, H₂S, sowie HCN und/oder NH₃ aufweisenden Gasgemischs zum Kondensationsbereich des Sauergas-Abscheiders zur Kondensation von Methanol aus dem Gasgemisch im Kondensationsbereich des Sauergas-Abscheiders;
Mittel zum Abziehen eines H₂S, sowie HCN und/oder NH₃ aufweisenden ersten Sauergas-Teilstroms aus dem Sauergas-Abscheider;
Mittel zur Absorption von HCN und/oder NH₃ aus einem H₂S, sowie HCN und/oder NH₃ aufweisenden zweiten Sauergas-Teilstrom im Absorptionsbereich des Sauergas-Abscheiders;
Mittel zum Abziehen eines zumindest teilweise von HCN und/oder NH₃ befreiten zweiten Sauergas-Teilstroms aus dem Sauergas-Abscheider;
Mittel zum Zuführen von tiefkaltem Methanol zum Absorptionsbereich des Sauergas-Abscheiders zur Absorption von HCN und/oder NH₃ in tiefkaltem Methanol im Absorptionsbereich des Sauergas-Abscheiders;
Mittel zum Abziehen eines mit HCN und/oder NH₃ beladenen tiefkalten Methanols aus dem Absorptionsbereich des Sauergas-Abscheiders;
Mittel zum Abziehen von kondensiertem Methanol aus dem Kondensationsbereich des Sauergas-Abscheiders.

Eine bevorzugte Ausführungsform des Sauergas-Abscheiders ist dadurch gekennzeichnet, dass der Kondensationsbereich und der Absorptionsbereich in ein einziges gemeinsames Gehäuse des Sauergas-Abscheiders integriert sind.

Dadurch ist eine platzsparende Anordnung innerhalb einer Gaswäsche-Anlage möglich, ohne dass zusätzliche Leitungen zwischen Kondensationsbereich und Absorptionsbereich erforderlich sind. Der gasdurchlässige Boden sorgt für eine ausreichende räumliche Trennung von Kondensationsbereich und Absorptionsbereich, so dass eine Integration beider Bereiche in ein Gehäuse möglich ist, ohne dass aus dem ersten Sauergas-Teilstrom ausgasende Verunreinigungen wie HCN und/oder NH₃ in den Absorptionsbereich gelangen und dort durch tiefkaltes Methanol absorbiert werden können.

Eine bevorzugte Ausführungsform des Sauergas-Abscheiders ist dadurch gekennzeichnet, dass zumindest ein Gehäuseteil des Absorptionsbereichs des Sauergas-Abscheiders einen rostbeständigen oder säurebeständigen Stahl als Werkstoff aufweist und/oder dass zumindest ein Gehäuseteil des Kondensationsbereichs des Sauergas-Abscheiders einen nicht legierten oder niedrig legierten Stahl als Werkstoff aufweist, vorzugsweise einen nicht legierten Stahl.

Da vornehmlich der Absorptionsbereich des Sauergas-Abscheiders sehr niedrigen Temperaturen durch tiefkaltes Methanol ausgesetzt ist, ist es ausreichend und von Vorteil ausschließlich den Absorptionsbereich des Sauergas-Abscheiders mit einem hochwertigen Werkstoff wie einem rostbeständigen oder säurebeständigen Stahl auszurüsten. Für den Kondensationsbereich, der weniger niedrigen Temperaturen ausgesetzt ist, ist es ausreichend einen nicht legierten oder niedrig legierten Stahl als Werkstoff zu verwenden.

Eine bevorzugte Ausführungsform des Sauergas-Abscheiders ist dadurch gekennzeichnet, dass der gasdurchlässige Boden als Kaminboden ausgestaltet ist.

Ein als Kaminboden ausgestalteter gasdurchlässiger Boden ist von unten nach oben durch das Gasgemisch des zweiten Sauergas-Teilstroms durchströmbar. Oberhalb des Kaminbodens werden Bestandteile aus dem zweiten Sauergas-Teilstrom wie HCN und/oder NH₃ durch tiefkaltes Methanol absorbiert und können sich auf dem Kaminboden im Absorptionsbereich sammeln. Das mit Verunreinigungen aus dem zweiten Sauergas-Teilstrom wie HCN und/oder NH₃ beladene tiefkalte Methanol ist über eine Leitung vom Kaminboden abziehbar, ohne dass dieses anschließend in Kontakt mit den Gasen des ersten Sauergas-Teilstroms treten könnte.

Eine bevorzugte Ausführungsform des Sauergas-Abscheiders ist dadurch gekennzeichnet, dass der Absorptionsbereich des Sauergas-Abscheiders ein Festbett aufweist. In einem bevorzugten Beispiel weist das Festbett eine Füllkörper-Schüttung zur Oberflächenvergrößerung des Absorptionsbereichs auf. Dadurch wird die Effizienz bei der Absorption der Verunreinigungen aus dem zweiten Sauergas-Teilstrom erhöht.

### Ausführungsbeispiel

Weitere Merkmale, Vorteile und Anwendungsmöglichkeiten der Erfindung ergeben sich auch aus der nachfolgenden Beschreibung eines Ausführungs- und Zahlenbeispiels und der Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen
- Figur 1: ein schematisch dargestelltes Fließbild eines aus dem Stand der Technik bekannten Verfahrens und einer Anlage zur Reinigung von Syntheserohgas mit Erzeugung eines Sauergases sowie
- Figur 2: ein schematisches dargestelltes Fließbild eines erfindungsgemäßen Verfahrens und einer Anlage zur Reinigung von Syntheserohgas mit Erzeugung eines Sauergases unter Verwendung eines Sauergas-Abscheiders.

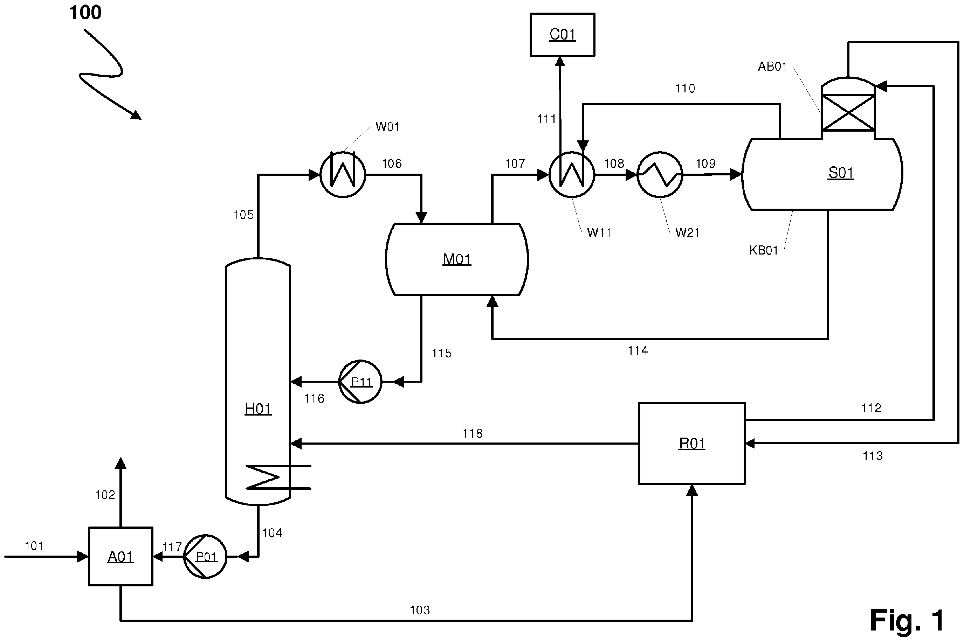

Figur 1 zeigt ein Verfahren bzw. eine Anlage 100 zur Reinigung von Syntheserohgas mit Methanol als physikalisch wirkendem Absorptionsmittel, bei dem ein Schwefelwasserstoff (H₂S) aufweisendes Sauergas erzeugt wird, welches einer Claus-Anlage zur Herstellung von elementarem Schwefel zugeführt wird.

Über eine Leitung 101 wird einer Absorptionsvorrichtung A01 bei einem Druck von 40 bar ein Rohsynthesegas zugeführt, welches als erwünschte Bestandteile Kohlenmonoxid (CO) und Wasserstoff (H₂), sowie als unerwünschte zu entfernende Bestandteile Schwefelwasserstoff (H₂S), Kohlendioxid (CO₂), sowie Cyanwasserstoff (HCN) aufweist. In Absorptionsvorrichtung A01 werden H₂S, CO₂ und HCN durch Behandlung mit kaltem Methanol als Absorptionsmittel entfernt. Gereinigtes Synthesegas verlässt Absorptionsvorrichtung A01 über eine Leitung 102. Mit H₂S und CO₂ beladenes Methanol wird über eine Leitung 103 aus Absorptionsvorrichtung A01 abgezogen und einem Reabsorber R01 zugeführt. Ferner werden mit HCN beladenes Methanol sowie mit CO₂ beladenes Methanol als weitere Ströme aus Absorptionsvorrichtung abgezogen. HCN beladenes Methanol, auch prewash Methanol genannt, wird dabei direkt dem Heißregenerator H01 zugeführt (nicht gezeigt). CO₂ beladenes Methanol wird nach Durchlaufen einer oder mehrerer Druckentspannungsstufen zur Entfernung von CO₂ (Flashen) ebenfalls Heißregenerator H01 zugeführt (nicht gezeigt). In Heißregenerator H01 durch Flashen mit Eigendampf regeneriertes Methanol wird über eine Leitung 104 abgezogen und durch eine Pumpe P01 sowie eine Leitung 117 Absorptionsvorrichtung A01 zur erneuten Absorption von unerwünschten Bestandteilen aus Synthesegas zugeführt.

In Reabsorber R01 wird aus CO₂ und H₂S beladenem Methanol durch Flashen mit Stickstoff als Inertgas CO₂ ausgetrieben. Dabei mitausgetriebener Schwefelwasserstoff wird ebenfalls in Reabsorber R01 durch Methanol reabsorbiert. Dabei erhaltenes, mit H₂S beladenes Methanol wird über eine Leitung 118 Heißregenerator H01 zur Entfernung von H₂S zugeführt. In Heißregenerator H01 wird durch Erhitzen (Aufkochen) von mit H₂S und HCN beladenem Methanol ein Gasgemisch erhalten, das Methanol-Dämpfe, H₂S sowie HCN umfasst und über eine Leitung 105 aus Heißregenerator H01 abgezogen wird. Nach Kühlen des aus Heißregenerator H01 abgezogenen Gasgemischs in einem Wärmetauscher W01 auf circa 40 °C wird das durch Teilkondensation von Methanol nun zweiphasige Gemisch aus H₂S, HCN, Methanol-Dampf und flüssigem Methanol einem Mischbehälter M01 über eine Leitung 106 zugeführt. Vorgenanntes Gemisch wird über eine Leitung 107 aus Mischbehälter M01 abgezogen und nach weiterer Kühlung in einem indirekten Wärmetauschern W11 und einem indirekten Wärmetauscher W21 über die Leitungen 107, 108 und 109 einem Sauergasabscheider S01 zugeführt. Sauergasabscheider S01 verfügt über einen Kondensationsbereich KB01 (unterer Teil) und einen Absorptionsbereich AB01 (oberer Bereich), wobei Absorptionsbereich AB01 ein Festbett aus Füllkörpern zur Vergrößerung der inneren Oberfläche aufweist. Bei Eintritt in Sauergasabscheider S01 weist das Gemisch aus Methanol, H₂S und HCN eine Temperatur von circa -36 °C auf. In Sauergasabscheider S01 wird die Gasphase aus H₂S und HCN im Kondensationsbereich KB01 von der Methanol-Flüssigphase getrennt. Ein erster dabei erhaltener Sauergas-Teilstrom aus H₂S und HCN wird über eine Leitung 110 aus Sauergasabscheider S01 abgezogen, zur Kühlung des aus der Leitung 107 zugeführten Gemischs in Wärmetauscher W11 verwendet und darauffolgend über eine Leitung 111 einer Claus-Anlage C01 zur Gewinnung von elementarem Schwefel zugeführt. Das Gemisch in Leitung 111 weist eine Temperatur von circa 25 °C auf.

Ein zweiter Sauergas-Teilstrom wird über Absorptionsbereich AB01 des SauergasAbscheiders S01 geleitet und dabei HCN aus dem zweiten Sauergas-Teilstrom durch tiefkaltes Methanol absorbiert. Tiefkaltes Methanol wird über eine Leitung 112 aus Reabsorber R01 dem Absorptionsbereich AB01 des Sauergasabscheiders S01 zugeführt und weist eine Temperatur von circa -63 °C auf. Von HCN befreites, nunmehr hauptsächlich H₂S aufweisendes Sauergas des zweiten Sauergas-Teilstroms wird über eine Leitung 113 Reabsorber R01 zugeführt, wodurch H₂S im Kreislauf gehalten und mit dem Methanol-Strom in Leitung 104 erneut Heißregenerator H01 zugeführt werden kann.

Kondensiertes Methanol aus Sauergas-Abscheider S01 wird über eine Leitung 114 Mischbehälter M01 zugeführt und dort mit teilweise kondensiertem Methanol sowie Gasgemisch aus Leitung 106 zusammengeführt und dabei zumindest teilweise vermischt, wodurch ein kontinuierlicher Temperaturausgleich zwischen den in Mischbehälter M01 befindlichen Komponenten erfolgt. Durch den in Mischbehälter M01 bewirkten Temperaturausgleich kommt es nicht zu unbeabsichtigten Ausgasungen durch zu schnelles oder unkontrolliertes Erwärmen, was zu Problemen bei der Rückführung des Methanols über die Leitungen 115 und 116 sowie Pumpe P11 zu Heißregenerator H01 führen kann. In Heißregenerator H01 erzeugtes regeneriertes Methanol wird wie vorgenannt über Leitung 104 abgezogen und über Pumpe P01 sowie Leitung 117 Absorptionsvorrichtung A01 zur erneuten Absorption von unerwünschten Bestandteilen aus Synthesegas zugeführt.

Im Verfahren gemäß Figur 1 tritt in Sauergas-Abscheider S01 das Problem auf, dass aus Reabsorber R01 über Leitung 112 zugeführtes, auf -63 °C gekühltes Methanol auch HCN aus dem ersten Sauergas-Teilstrom absorbieren kann. Dieses HCN-Gas ist jedoch für den Ausgang in Richtung Claus-Anlage bestimmt. Aus diesem Grund kann es in nachteiliger Weise zu Anreicherungen von HCN im Heißregenerator H01 und weiteren bereits genannten Problemen kommen.

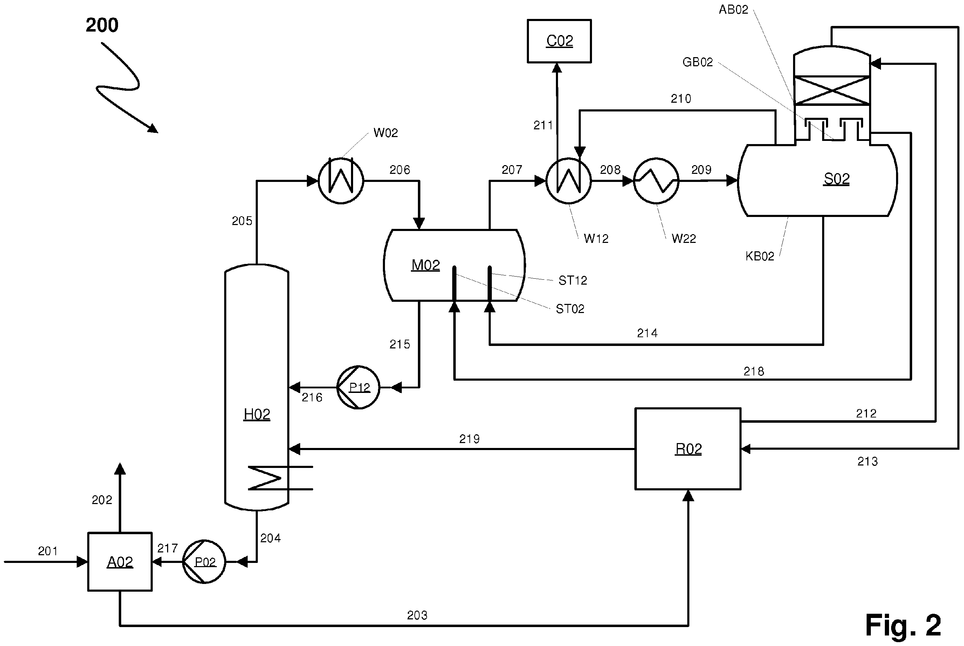

Figur 2 zeigt ein erfindungsgemäßes Verfahren 200 zur Reinigung von Syntheserohgas mit Methanol als physikalisch wirkendem Absorptionsmittel, bei dem ein Schwefelwasserstoff (H₂S) aufweisendes Sauergas erzeugt wird, welches einer Claus-Anlage zur Herstellung von elementarem Schwefel zugeführt wird. Figur 2 zeigt ferner einen Sauergas-Abscheider und dessen Verwendung im erfindungsgemäßen Verfahren.

Über eine Leitung 201 wird einer Absorptionsvorrichtung A02 bei einem Druck von 40 bar ein Rohsynthesegas zugeführt, welches als erwünschte Bestandteile Kohlenmonoxid (CO) und Wasserstoff (H₂), sowie als unerwünschte zu entfernende Bestandteile Schwefelwasserstoff (H₂S), Kohlendioxid (CO₂), sowie Cyanwasserstoff (HCN) aufweist. In Absorptionsvorrichtung A02 werden H₂S, CO₂ und HCN durch Behandlung mit kaltem Methanol als Absorptionsmittel entfernt. Gereinigtes Synthesegas verlässt Absorptionsvorrichtung A02 über eine Leitung 202. Mit H₂S und CO₂ beladenes Methanol wird über eine Leitung 203 aus Absorptionsvorrichtung A02 abgezogen und einem Reabsorber R02 zugeführt. Ferner werden mit HCN beladenes Methanol sowie mit CO₂ beladenes Methanol als weitere Ströme aus Absorptionsvorrichtung abgezogen. HCN beladenes Methanol, auch prewash Methanol genannt, wird dabei direkt dem Heißregenerator H02 zugeführt (nicht gezeigt). CO₂ beladenes Methanol wird nach Durchlaufen einer oder mehrerer Druckentspannungsstufen zur Entfernung von CO₂ (Flashen) ebenfalls Heißregenerator H02 zugeführt. In Heißregenerator H02 durch Flashen mit Eigendampf regeneriertes Methanol wird über eine Leitung 204 abgezogen und durch eine Pumpe P02 sowie eine Leitung 217 Absorptionsvorrichtung A02 zur erneuten Absorption von unerwünschten Bestandteilen aus Synthesegas zugeführt.

In Reabsorber R02 wird aus CO₂ und H₂S beladenem Methanol durch Flashen mit Stickstoff als Inertgas CO₂ ausgetrieben. Dabei mitausgetriebener Schwefelwasserstoff wird ebenfalls in Reabsorber R02 durch Methanol reabsorbiert. Dabei erhaltenes, mit H₂S beladenes Methanol wird über eine Leitung 219 Heißregenerator H02 zur Entfernung von H₂S zugeführt. In Heißregenerator H02 wird durch Erhitzen (Aufkochen) von mit H₂S und HCN beladenem Methanol ein Gasgemisch erhalten, das Methanol-Dämpfe, H₂S sowie HCN umfasst und über eine Leitung 205 aus Heißregenerator H02 abgezogen wird. Nach Kühlen des aus Heißregenerator H02 abgezogenen Gasgemischs in einem Wärmetauscher W02 auf circa 40 °C wird das durch Teilkondensation von Methanol nun zweiphasige Gemisch aus H₂S, HCN, Methanol-Dampf und flüssigem Methanol einem Mischbehälter M02 über eine Leitung 206 zugeführt. Vorgenanntes Gemisch wird über eine Leitung 207 aus Mischbehälter M02 abgezogen und nach weiterer Kühlung in einem indirekten Wärmetauschern W12 und einem indirekten Wärmetauscher W22 über die Leitungen 207, 208 und 209 einem Sauergasabscheider S02 zugeführt.

Sauergasabscheider S02 verfügt über einen Kondensationsbereich KB02 (unterer Teil) und einen Absorptionsbereich AB02 (oberer Bereich), wobei Absorptionsbereich AB02 ein Festbett aus Füllkörpern zur Vergrößerung der inneren Oberfläche aufweist. Absorptionsbereich AB02 und Kondensationsbereich S02 sind erfindungsgemäß durch einen gasdurchlässigen Boden GB02 voneinander separiert. Gasdurchlässiger Boden GB02 ist im gezeigten Beispiel als Kaminboden ausgestaltet. Das Gehäuseteil des Absorptionsbereichs AB02 von Sauergas-Abscheider S02 ist aus einem rostbeständigen Stahl gefertigt, während das Gehäuseteil des Kondensationsbereichs KB02 des Sauergas-Abscheiders S02 aus einem niedriglegierten Stahl gefertigt ist.

Bei Eintritt in Sauergasabscheider S02 weist das Gemisch aus Methanol, H₂S und HCN eine Temperatur von circa -36 °C auf. In Sauergasabscheider S02 wird die Gasphase aus H₂S und HCN im Kondensationsbereich KB02 von der Methanol-Flüssigphase getrennt. Ein erster dabei erhaltener Sauergas-Teilstrom aus H₂S und HCN wird über eine Leitung 210 aus Sauergasabscheider S02 abgezogen, zur Kühlung des aus der Leitung 207 zugeführten Gemischs in Wärmetauscher W12 verwendet und darauffolgend über eine Leitung 211 einer Claus-Anlage CO2 zur Gewinnung von elementarem Schwefel zugeführt. Das Gemisch in Leitung 211 weist eine Temperatur von circa 25 °C auf.

Ein zweiter Sauergas-Teilstrom wird vom Kondensationsbereich KB02 durch gasdurchlässigen Boden GB02 hindurch von unten nach oben über Absorptionsbereich AB02 des Sauergas-Abscheiders S02 geleitet und dabei HCN aus dem zweiten Sauergas-Teilstrom durch tiefkaltes Methanol absorbiert. Tiefkaltes, mit HCN beladenes Methanol sammelt sich als Flüssigkeitsstand (nicht gezeigt) auf gasdurchlässigem Boden GB02. Auf dem als Kaminboden ausgestalteten gasdurchlässigen Boden GB02 gesammeltes, mit HCN beladenes Methanol, wird über eine Leitung 218 und einen Einfüllstutzen ST02 Mischbehälter M02 zugeführt. Dabei ist Einfüllstutzen ST02 durch Beabstandung seines Endes von der Gehäusewand des Mischbehälters M02 derart angeordnet, dass tiefkaltes mit HCN beladenes Methanol während des Einfüllvorgangs nicht in Kontakt mit der Gehäusewand von Mischbehälter M02 kommt. Die Gehäusewand von Mischbehälter M02 ist aus einem niedriglegierten Stahl gefertigt, während Einfüllstutzen ST02 aus einem höher legierten, säure- und rostbeständigen Stahl gefertigt ist. Durch Anordnung des gasdurchlässigen Bodens GB02 in Sauergas-Abscheider S02 und die Rückführung von HCN beladenem Methanol über Leitung 218 sowie Einfüllstutzen ST02 in Mischbehälter M02 und anschließend Heißregenerator H02 kommt vom gasdurchlässigen Boden GB02 abgezogenes tiefkaltes Methanol nicht in Kontakt mit im Kondensationsbereich KB02 vorhandenem HCN-Gas. Dadurch ist eine Reabsorption von HCN aus dem zweiten Sauergas-Strom in Methanol im Kondensationsbereich KB02 von Sauergas-Abscheider S02 nicht möglich. Im Resultat findet keine Anreicherung von HCN in Heißregenerator H02 oder anderen Bauteilen der Gaswäsche-Anlage statt.

Zur Absorption von HCN in Absorptionsbereich AB02 verwendetes tiefkaltes Methanol wird über eine Leitung 212 aus Reabsorber R02 dem Absorptionsbereich AB02 des Sauergasabscheiders S02 zugeführt. Es weist eine Temperatur von circa -63 °C auf. Von HCN befreites, nunmehr hauptsächlich H₂S aufweisendes Sauergas des zweiten Sauergas-Teilstroms wird über eine Leitung 213 Reabsorber R02 zugeführt, wodurch H₂S im Kreislauf gehalten und mit dem Methanol-Strom in Leitung 204 erneut Heißregenerator H02 zugeführt werden kann.

Kondensiertes Methanol aus Sauergas-Abscheider S02 wird über eine Leitung 214 Mischbehälter M02 über einen aus rostbeständigem Stahl gefertigten Einfüllstutzen ST12 zugeführt und dort mit teilweise kondensiertem Methanol sowie Gasgemisch aus Leitung 206 gemischt, wodurch ein kontinuierlicher Temperaturausgleich zwischen den in Mischbehälter M02 befindlichen Komponenten erfolgt. Das Ende von Einfüllstutzen ST12 ist ebenso wie das Ende von Einfüllstutzen ST02 von der Wandung des Mischbehälters M02 beabstandet. Durch in Mischbehälter M02 bewirktem Temperaturausgleich kommt es nicht zu unbeabsichtigten Ausgasungen durch zu schnelles oder unkontrolliertes Erwärmen, was zu Problemen bei der Rückführung des Methanols über die Leitungen 215 und 216 sowie Pumpe P12 zu Heißregenerator H02 führen kann. In Heißregenerator H02 erzeugtes regeneriertes Methanol wird wie vorgenannt über Leitung 204 abgezogen und über Pumpe P01 sowie Leitung 217 Absorptionsvorrichtung A01 zur erneuten Absorption von unerwünschten Bestandteilen aus Synthesegas zugeführt.

Vorteile des erfindungsgemäßen Verfahrens werden weiter durch das folgende Zahlenbeispiel verdeutlicht. Untersucht wurde der NH₃-, HCN-, H₂S- und COS-Gehalt im den Sauergas-Abscheider in Richtung Claus-Anlage über die Leitungen 111 oder 211 verlassenden Gasgemisch sowie der Gehalt der vorgenannten Gase des im Sauergas-Abscheider kondensierten Methanol, welches über die Leitungen 114 beziehungsweise 214 und 218 zum Mischbehälter (M01 oder M02) zurückgeführt wird. Die in der folgenden Tabelle dargestellten Werte wurden im Rahmen einer Simulation mit Hilfe der Software "Aspen Plus" in mol-% berechnet und für das Vergleichsbeispiel auf 100% normiert, so dass Werte gemäß Erfindung die Molanteil-Abweichung (Molenbruch) vom normierten 100% Wert darstellen.

| | Sauergas zur Claus-Anlage | | Kondensiertes Methanol | |
|---|---|---|---|---|
| | Beispiel (Erfindung) | Vergleichsbeispiel | Beispiel (Erfindung) | Vergleichsbeispiel |
| | Molanteil-Abweichung | | | |
| H₂S | 100 % | 100 % | 98 % | 100 % |
| COS | 100 % | 100 % | 99 % | 100 % |
| NH₃ | 114 % | 100 % | 57 % | 100 % |
| HCN | 138 % | 100 % | 74 % | 100 % |

Das Beispiel zeigt, dass durch das erfindungsgemäße Verfahren im Vergleich zum bekannten Verfahren gemäß Vergleichsbeispiel 14 % mehr NH₃ und 38 % mehr HCN zur Claus-Anlage gelangen. Gleichzeitig verringert sich der Anteil dieser Substanzen im kondensierten Methanol in vorteilhafter Weise um 43 % (NH₃) und 26 % (HCN).

Ausführungsformen der Erfindung werden unter Bezugnahme auf verschiedene Arten von Gegenständen beschrieben. Insbesondere werden bestimmte Ausführungsformen unter Bezugnahme auf Ansprüche des Verfahrenstyps beschrieben, während andere Ausführungsformen unter Bezugnahme auf die Ansprüche des Vorrichtungstyps beschrieben werden. Ein Fachmann wird jedoch aus der obigen und der folgenden Beschreibung entnehmen, dass, außer anders angegeben, zusätzlich zu irgendeiner Kombination von Merkmalen, die zu einer Art von Anspruchstyp gehören, auch jede Kombination zwischen Merkmalen in Bezug auf verschiede Arten von Gegenständen oder Anspruchstypen in Betracht gezogen werden kann. Alle Merkmale können kombiniert werden um synergetische Effekte zu erzielen, welche über die einfache Summierung der technischen Merkmale hinausgehen.

Während die Erfindung im Detail in den Zeichnungen und der vorhergehenden Beschreibung dargestellt und beschrieben wurde, sollen eine solche Darstellung und Beschreibung als veranschaulichend oder beispielhaft und nicht einschränkend betrachtet werden. Die Erfindung ist nicht auf die offenbarten Ausführungsformen beschränkt. Andere Variationen der offenbarten Ausführungsformen können von einem Fachmann auf dem Gebiet der beanspruchten Erfindung aus einem Studium der Zeichnungen, der Offenbarung und der abhängigen Ansprüche verstanden und ausgeführt werden.

In den Ansprüchen schließt das Wort "aufweisend" oder "umfassend" weitere Elemente oder Schritte nicht aus, und der unbestimmte Artikel "ein" oder "eine" schließt eine Mehrzahl nicht aus. Bezugszeichen in den Ansprüchen sollten nicht so ausgelegt werden, dass sie den Umfang der Ansprüche einschränken.

### Bezugszeichenliste

- 100: Verfahren und Anlage
- 101 bis 118: Leitung
- A01: Absorptionsvorrichtung
- AB01: Absorptionsbereich
- C01: Claus-Anlage
- H01: Heißregenerator
- KB01: Kondensationsbereich
- M01: Mischbehälter
- P01, P11: Pumpe
- R01: Reabsorber
- S01: Sauergas-Abscheider
- W01, W11, W21: Wärmeaustauscher

- 200: Verfahren und Anlage
- 201 bis 219: Leitung
- A02: Absorptionsvorrichtung
- AB02: Absorptionsbereich
- C02: Claus-Anlage
- GB02: Gasdurchlässiger Boden
- H02: Heißregenerator
- KB02: Kondensationsbereich
- M02: Mischbehälter
- P02, P12: Pumpe
- R02: Reabsorber
- S02: Sauergas-Abscheider
- ST02, ST12: Einfüllstutzen
- W02, W12, W22: Wärmeaustauscher

## Patentansprüche

1. Verfahren zur Reinigung von Syntheserohgas mit Methanol als physikalisch wirkendem Absorptionsmittel, bei dem ein zumindest Schwefelwasserstoff (H₂S) aufweisendes Sauergas erzeugt wird, und das Verfahren folgende Prozessschritte umfasst:
- Behandeln von zumindest Kohlenmonoxid (CO), Wasserstoff (H₂). Schwefelwasserstoff (H₂S), sowie Cyanwasserstoff (HCN) und/oder Ammoniak (NH₃) aufweisendem Syntheserohgas mit Methanol in einer Absorptionsvorrichtung, wobei ein zumindest mit H₂S, sowie HCN und/oder NH₃ beladenes Methanol erhalten wird;
- Heißregenerieren des mit H₂S, sowie HCN und/oder NH₃ beladenen Methanols in einem Heißregenerator, wobei ein zumindest Methanol, H₂S, sowie HCN und/oder NH₃ aufweisendes Gasgemisch erhalten wird, das aus dem Heißregenerator abgezogen wird;
- Kühlen des aus dem Heißregenerator abgezogenen Gasgemischs und Überführen des gekühlten Gasgemischs in einen Sauergas-Abscheider, wobei der Sauergas-Abscheider einen Absorptionsbereich und einen Kondensationsbereich aufweist, wobei der Absorptionsbereich und der Kondensationsbereich durch einen gasdurchlässigen Boden voneinander separiert sind;
- Kondensieren von Methanol aus dem Gasgemisch im Kondensationsbereich des Sauergas-Abscheiders, Abziehen des kondensierten Methanols aus dem Sauergas-Abscheider und Überführen zum Heißregenerator;
- Abziehen eines H₂S, sowie HCN und/oder NH₃ aufweisenden ersten Sauergas-Teilstroms aus dem Sauergas-Abscheider;
- Leiten eines H₂S, sowie HCN und/oder NH₃ aufweisenden zweiten Sauergas-Teilstroms über den Absorptionsbereich des Sauergas-Abscheiders, wobei HCN und/oder NH₃ durch dem Absorptionsbereich des Sauergas-Abscheiders zugeführtes tiefkaltes Methanol absorbiert wird, sich mit HCN und/oder NH₃ beladenes tiefkaltes Methanol im Bereich des gasdurchlässigen Bodens sammelt und ein zumindest teilweise von HCN und/oder NH₃ befreiter zweiter Sauergas-Teilstrom erhalten wird;
- Abziehen des zumindest teilweise von HCN und/oder NH₃ befreiten zweiten Sauergas-Teilstroms aus dem Sauergas-Abscheider;
- Abziehen des mit HCN und/oder NH₃ beladenen tiefkalten Methanols vom Bereich des gasdurchlässigen Bodens des Sauergas-Abscheiders und Überführen des mit HCN und/oder NH₃ beladenen tiefkalten Methanols zum Heißregenerator.

2. Verfahren nach Anspruch 1, **dadurch gekennzeichnet, dass** das kondensierte Methanol und das mit HCN und/oder NH₃ beladene tiefkalte Methanol als getrennte Ströme einem Mischbehälter zugeführt werden, und nach Mischen im Mischbehälter zum Heißregenerator zurückgeführt werden.

3. Verfahren nach Anspruch 2, **dadurch gekennzeichnet, dass** das aus dem Heißregenerator abgezogene Gasgemisch dem Mischbehälter zugeführt wird, im Mischbehälter mit dem kondensierten Methanol sowie dem mit HCN und/oder NH₃ beladenen tiefkaltem Methanol zusammengeführt wird, wobei Methanol aus dem Gasgemisch zumindest teilweise kondensiert, wodurch ein Zweiphasen-Gemisch erhalten wird, und das zumindest teilweise kondensiertes Methanol enthaltende Zweiphasen-Gemisch anschließend dem Sauergas-Abscheider zugeführt wird.

4. Verfahren nach einem der vorangehenden Ansprüche, **dadurch gekennzeichnet, dass** der zumindest teilweise von HCN und/oder NH₃ befreite zweite Sauergas-Teilstrom einem Reabsorber zur Reabsorption von im von HCN und/oder NH₃ zumindest teilweise befreiten zweiten Sauergas-Teilstrom enthaltenen H₂S zugeführt wird, wobei im Reabsorber mit H₂S beladenes Methanol erhalten wird.

5. Verfahren nach Anspruch 4, **dadurch gekennzeichnet, dass** das mit H₂S beladene Methanol dem Heißregenerator zugeführt wird.

6. Verfahren nach einem der Ansprüche 4 oder 5, **dadurch gekennzeichnet, dass** das tiefkalte Methanol dem Absorptionsbereich des Sauergas-Abscheiders aus dem Reabsorber zugeführt wird.

7. Verfahren nach einem der vorangehenden Ansprüche, **dadurch gekennzeichnet, dass** das tief kalte Methanol eine Temperatur von kleiner oder gleich -40 °C aufweist, bevorzugt kleiner oder gleich -50 °C, besonders bevorzugt von kleiner oder gleich -60 °C.

8. Verfahren nach einem der vorangehenden Ansprüche, **dadurch gekennzeichnet, dass** der erste Sauergas-Teilstrom einer Claus-Anlage zur Herstellung von Schwefel zugeführt wird.

9. Verfahren nach einem der Ansprüche 2 bis 8, **dadurch gekennzeichnet, dass** der Mischbehälter über wenigstens einen Einfüllstutzen zum Zuführen des mit HCN und/oder NH₃ beladenen tiefkalten Methanols und/oder des kondensierten Methanols verfügt, wobei ein Ende des Einfüllstutzens so von einer Gehäusewand des Mischbehälters beabstandet ist, dass das mit HCN und/oder NH₃ beladene tiefkalte Methanol und/oder das kondensierte Methanol beim Einfüllvorgang nicht in unmittelbaren Kontakt mit der Gehäusewand des Mischbehälters kommt oder kommen.

10. Verfahren nach Anspruch 9, **dadurch gekennzeichnet, dass** das Gehäuse des Mischbehälters einen nicht legierten oder niedrig legierten Stahl als Werkstoff aufweist, vorzugsweise einen nicht legierten Stahl.

11. Verfahren nach Anspruch 9 oder 10, **dadurch gekennzeichnet, dass** der Einfüllstutzen einen säure- und rostbeständigen Stahl als Werkstoff aufweist.

## Claims

1. Process for purifying crude synthesis gas with methanol as a physical absorption medium, wherein an acid gas comprising at least hydrogen sulfide (H₂S) is produced and the process comprises the following process steps:
- treating crude synthesis gas comprising at least carbon monoxide (CO), hydrogen (H₂), hydrogen sulfide (H₂S) and hydrogen cyanide (HCN) and/or ammonia (NH₃) with methanol in an absorption apparatus to obtain a methanol laden with at least H₂S and HCN and/or NH₃;
- hot-regenerating the methanol laden with H₂S and HCN and/or NH₃ in a hot regenerator to obtain a gas mixture comprising at least methanol, H₂S and HCN and/or NH₃ which is withdrawn from the hot regenerator;
- cooling the gas mixture withdrawn from the hot regenerator and transferring the cooled gas mixture into an acid gas separator, wherein the acid gas separator comprises an absorption region and a condensation region, wherein the absorption region and the condensation region are separated from one another by a gas-permeable tray;
- condensing methanol from the gas mixture in the condensation region of the acid gas separator, withdrawing the condensed methanol from the acid gas separator and transferring it to the hot regenerator;
- withdrawing a first acid gas substream comprising H₂S and HCN and/or NH₃ from the acid gas separator;
- passing a second acid gas substream comprising H₂S and HCN and/or NH₃ through the absorption region of the acid gas separator, wherein HCN and/or NH₃ are absorbed by cryogenic methanol supplied to the absorption region of the acid gas separator, cryogenic methanol laden with HCN and/or NH₃ collects in the region of the gas-permeable tray and a second acid gas substream at least partially freed of HCN and/or NH₃ is obtained;
- withdrawing the second acid gas substream at least partially freed of HCN and/or NH₃ from the acid gas separator;
- withdrawing the cryogenic methanol laden with HCN and/or NH₃ from the region of the gas-permeable tray of the acid gas separator and transferring the cryogenic methanol laden with HCN and/or NH₃ to the hot regenerator.

2. Process according to Claim 1, **characterized in that** the condensed methanol and the cryogenic methanol laden with HCN and/or NH₃ are supplied to a mixing vessel as separate streams and after mixing in the mixing vessel are recycled to the hot regenerator.

3. Process according to Claim 2, **characterized in that** the gas mixture withdrawn from the hot regenerator is supplied to the mixing vessel, combined in the mixing vessel with the condensed methanol and the cryogenic methanol laden with HCN and/or NH₃, wherein methanol from the gas mixture at least partially condenses to afford a biphasic mixture and the biphasic mixture containing at least partially condensed methanol is subsequently supplied to the acid gas separator.

4. Process according to any of the preceding claims, **characterized in that** the second acid gas substream at least partially freed of HCN and/or NH₃ is supplied to a reabsorber for reabsorption of H₂S present in the second acid gas substream at least partially freed of HCN and/or NH₃ to obtain methanol laden with H₂S in the reabsorber.

5. Process according to Claim 4, **characterized in that** the methanol laden with H₂S is supplied to the hot regenerator.

6. Process according to either of Claims 4 and 5, **characterized in that** the cryogenic methanol is supplied to the absorption region of the acid gas separator from the reabsorber.

7. Process according to any of the preceding claims, **characterized in that** the cryogenic methanol has a temperature of not more than -40°C, preferably not more than -50°C, particularly preferably not more than -60°C.

8. Process according to any of the preceding claims, **characterized in that** the first acid gas substream is supplied to a Claus plant for producing sulfur.

9. Process according to any of Claims 2 to 8, **characterized in that** the mixing vessel has at least one filling port for supplying the cryogenic methanol laden with HCN and/or NH₃ and/or the condensed methanol, wherein one end of the filling port is spaced apart from a housing wall of the mixing vessel such that the cryogenic methanol laden with HCN and/or NH₃ and/or the condensed methanol does not/do not come into direct contact with the housing wall of the mixing vessel during the filling operation.

10. Process according to Claim 9, **characterized in that** the housing of the mixing vessel comprises a non-alloyed or low-alloy steel as a material of construction, preferably a non-alloyed steel.

11. Process according to Claim 9 or 10, **characterized in that** the filling port comprises an acid- and rustresistant steel as a material of construction.

## Revendications

1. Procédé de purification de gaz brut de synthèse avec du méthanol en tant qu'agent d'absorption agissant physiquement, selon lequel un gaz acide présentant au moins du sulfure d'hydrogène (H₂S) est produit, et le procédé comprend les étapes de processus suivantes :
- le traitement de gaz brut de synthèse présentant au moins du monoxyde de carbone (CO), de l'hydrogène (H₂), du sulfure d'hydrogène (H₂S), ainsi que du cyanure d'hydrogène (HCN) et/ou de l'ammoniac (NH₃) avec du méthanol dans un dispositif d'absorption, un méthanol chargé au moins d'H₂S, ainsi que de HCN et/ou de NH₃ étant obtenu ;
- la régénération à chaud du méthanol chargé de H₂S, ainsi que de HCN et/ou de NH₃, dans un régénérateur à chaud, un mélange gazeux présentant au moins du méthanol, du H₂S, ainsi que du HCN et/ou du NH₃ étant obtenu, qui est soutiré du régénérateur à chaud ;
- le refroidissement du mélange gazeux soutiré du régénérateur à chaud et le transfert du mélange gazeux refroidi dans un séparateur de gaz acide, le séparateur de gaz acide présentant une zone d'absorption et une zone de condensation, la zone d'absorption et la zone de condensation étant séparées l'une de l'autre par un fond perméable au gaz ;
- la condensation de méthanol du mélange gazeux dans la zone de condensation du séparateur de gaz acide, le soutirage du méthanol condensé du séparateur de gaz acide et le transfert vers le régénérateur à chaud ;
- le soutirage d'un premier courant partiel de gaz acide comprenant du H₂S, ainsi que du HCN et/ou du NH₃ du séparateur de gaz acide ;
- l'acheminement d'un deuxième courant partiel de gaz acide présentant du H₂S, ainsi que du HCN et/ou du NH₃, sur la zone d'absorption du séparateur de gaz acide, le HCN et/ou le NH₃ étant absorbés par du méthanol à basse température amené à la zone d'absorption du séparateur de gaz acide, le méthanol à basse température chargé de HCN et/ou de NH₃ s'accumulant dans la zone du fond perméable au gaz et un deuxième courant partiel de gaz acide au moins partiellement débarrassé de HCN et/ou de NH₃ étant obtenu ;
- le soutirage du deuxième courant partiel de gaz acide au moins partiellement débarrassé de HCN et/ou de NH₃ du séparateur de gaz acide ;
- le soutirage du méthanol à basse température chargé de HCN et/ou de NH₃ de la zone du fond perméable au gaz du séparateur de gaz acide et le transfert du méthanol à basse température chargé de HCN et/ou de NH₃ vers le régénérateur à chaud.

2. Procédé selon la revendication 1, **caractérisé en ce que** le méthanol condensé et le méthanol à basse température chargé de HCN et/ou de NH₃ sont amenés sous forme de courants séparés à un récipient de mélange et, après mélange dans le récipient de mélange, sont renvoyés vers le générateur à chaud.

3. Procédé selon la revendication 2, **caractérisé en ce que** le mélange gazeux soutiré du régénérateur à chaud est amené au récipient de mélange, est combiné dans le récipient de mélange avec le méthanol condensé ainsi que le méthanol à basse température chargé de HCN et/ou de NH₃, le méthanol étant au moins partiellement condensé à partir du mélange gazeux, ce qui permet d'obtenir un mélange à deux phases, et le mélange à deux phases contenant du méthanol au moins partiellement condensé est ensuite amené au séparateur de gaz acide.

4. Procédé selon l'une quelconque des revendications précédentes, **caractérisé en ce que** le deuxième courant partiel de gaz acide au moins partiellement débarrassé de HCN et/ou de NH₃ est amené à un réabsorbeur pour la réabsorption de H₂S contenu dans le deuxième courant partiel de gaz acide au moins partiellement débarrassé de HCN et/ou de NH₃, du méthanol chargé de H₂S étant obtenu dans le réabsorbeur.

5. Procédé selon la revendication 4, **caractérisé en ce que** le méthanol chargé de H₂S est amené au régénérateur à chaud.

6. Procédé selon l'une quelconque des revendications 4 ou 5, **caractérisé en ce que** le méthanol à basse température est amené à la zone d'absorption du séparateur de gaz acide à partir du réabsorbeur.

7. Procédé selon l'une quelconque des revendications précédentes, **caractérisé en ce que** le méthanol à basse température présente une température inférieure ou égale à -40 °C, de préférence inférieure ou égale à -50 °C, de manière particulièrement préférée inférieure ou égale à -60 °C.

8. Procédé selon l'une quelconque des revendications précédentes, **caractérisé en ce que** le premier courant partiel de gaz acide est amené à une installation Claus pour la production de soufre.

9. Procédé selon l'une quelconque des revendications 2 à 8, **caractérisé en ce que** le récipient de mélange dispose d'au moins une tubulure de remplissage pour l'amenée du méthanol à basse température chargé de HCN et/ou de NH₃ et/ou du méthanol condensé, une extrémité de la tubulure de remplissage étant espacée d'une paroi de corps du récipient de mélange de telle sorte que le méthanol à basse température chargé de HCN et/ou de NH₃ et/ou le méthanol condensé n'entre pas en contact direct avec la paroi de corps du récipient de mélange lors de l'opération de remplissage.

10. Procédé selon la revendication 9, **caractérisé en ce que** le corps du récipient de mélange présente un acier non allié ou faiblement allié en tant que matériau, de préférence un acier non allié.

11. Procédé selon la revendication 9 ou 10, **caractérisé en ce que** la tubulure de remplissage présente un acier résistant à l'acide et à la rouille en tant que matériau.
